(19) Europäisches Patentamt / European Patent Office / Office européen des brevets

(11) **EP 1 337 451 B2**

(12) **NEUE EUROPÄISCHE PATENTSCHRIFT**

(45) Veröffentlichungstag und Bekanntmachung des Hinweises auf die Entscheidung über den Einspruch:
**16.05.2007 Patentblatt 2007/20**

(45) Hinweis auf die Patenterteilung:
**11.08.2004 Patentblatt 2004/33**

(21) Anmeldenummer: **01992681.5**

(22) Anmeldetag: **30.10.2001**

(51) Int Cl.:
***B65G 53/66*** *(2006.01)*

(86) Internationale Anmeldenummer:
**PCT/EP2001/012504**

(87) Internationale Veröffentlichungsnummer:
**WO 2002/036469 (10.05.2002 Gazette 2002/19)**

(54) **VERFAHREN ZUR PNEUMATISCHEN FÖRDERUNG VON SCHÜTTGUT**

METHOD FOR THE PNEUMATIC TRANSPORTATION OF BULK MATERIAL

PROCEDE POUR LE TRANSPORT PNEUMATIQUE DE PRODUITS EN VRAC

(84) Benannte Vertragsstaaten:
**DE FR**

(30) Priorität: **31.10.2000 DE 10054117**

(43) Veröffentlichungstag der Anmeldung:
**27.08.2003 Patentblatt 2003/35**

(73) Patentinhaber: **Coperion Waeschle GmbH & Co. KG**
**88250 Weingarten (DE)**

(72) Erfinder:
• **ERNST, Reinhard**
  **88250 Weingarten (DE)**
• **JOKISCH, Marcus**
  **88263 Horgenzell (DE)**
• **LANG, Klaus-Peter**
  **88339 Bad Waldsee (DE)**
• **KNIESS, Jochen**
  **88326 Aulendorf (DE)**

(74) Vertreter: **Rau, Manfred et al**
**Rau, Schneck & Hübner**
**Patentanwälte**
**Königstrasse 2**
**90402 Nürnberg (DE)**

(56) Entgegenhaltungen:
**EP-A- 0 490 174      DE-A- 1 556 111**
**DE-A- 1 950 055**

EP 1 337 451 B2

## Beschreibung

### Gebiet der Erfindung

Verfahren zur pneumatischen Förderung von Schüttgut, insbesondere von Kunststoffgranulaten, durch eine Förderleitung, bei dem das Schüttgut an mindestens einer Schüttgutaufgabe mittels eines Schleusorgans in einen einstellbaren Fördergasmengenstrom eingespeist und in Form diskreter, durch Fördergas zueinander beabstandeter Schüttgutpfropfen von der Schüttgutaufgabe zu mindestens einem Zielort transportiert wird.

Die Erfindung betrifft ein Verfahren zur pneumatischen Förderung von Schüttgut, insbesondere von Kunststoffgranulaten, durch eine Förderleitung, bei dem das Schüttgut an mindestens einem Aufgabeort mittels eines Schleusorgans in einen einstellbaren Fördergasstrom eingespeist und in Form diskreter, durch Polster aus Fördergas zueinander beabstandeter Schüttgutpfropfen vom Aufgabeort zu mindestens einem Zielort transportiert wird, sowie eine Vorrichtung zur Durchführung des Verfahrens.

Die pneumatische Förderung von Schüttgütern, beispielsweise von Granulaten aus Kunststoff, kann grundsätzlich als Flugförderung in Form eines in einem Fördergasstrom weitgehend gleichmäßig verteilten Schüttgutstroms bei niedriger Beladung (Verhältnis von Schüttgutmassenstrom zu Fördergasmassenstrom) und hoher Fördergeschwindigkeit oder als Langsamförderung bei hoher Beladung und niedriger Fördergeschwindigkeit in Form zueinander durch Gaspolster beabstandeter Schüttgutpfropfen erfolgen.

Die Errichtung von Anlagen zur Flugförderung von Schüttgut ist mit vergleichsweise niedrigen Investitionskosten verbunden, da die verwendeten Bauteile nur eine geringe Druckfestigkeit aufweisen müssen. Außerdem kann bei diesem Förderverfahren in der Regel zur Aufrechterhaltung eines stabilen Förderzustands bei Voll- und Teillastförderung auf eine geregelte Zuführung des Fördergasstroms in die Förderleitung verzichtet werden. Ferner treten im Fördersystem keine impulsartigen Belastungen auf, die durch eine verstärkte Unterstützungskonstruktion für die Förderleitung aufgefangen werden müssen.

Durch die hohe Fördergeschwindigkeit können sich beim Auftreffen plastifizierbarer Schüttgutpartikel auf die Förderleitung an deren innerer Wandung Beläge aus aufgeschmolzenem Schüttgut bilden, die sich bei der Förderung in Form von Folien oder Fäden periodisch von der Förderleitung ablösen und das Schüttgut verunreinigen.

Bei der mit niedriger Geschwindigkeit erfolgenden Langsamförderung kann dieser unerwünschte Effekt vermieden werden. Darüber hinaus läßt sich durch dieses Förderverfahren die Entstehung staubförmigen Abriebs insbesondere bei spröden und harten Schüttgütern positiv beeinflussen. Es ist jedoch erforderlich, eine Anlage zur Langsamförderung mit einer Einrichtung zur geregelten Einstellung des zugeführten Fördergasstroms zu versehen, da bei einer für Vollast ausgelegten Förderanlage bei Verringerung der zu fördernden Schüttgutmenge oder Verkürzung des Förderwegs instabile Förderzustände auftreten können, die hohe mechanische Belastungen der Förderanlage zur Folge haben.

### Stand der Technik

Ein gattungsgemäßes Verfahren zur pneumatischen Langsamförderung von Schüttgut ist aus der Patentschrift EP 0 490 174 B1 bekannt. Das Schüttgut wird mittels eines als Zellenradschleuse ausgebildeten Schleusorgans aus einem Aufgabebehälter in eine Förderleitung gespeist und von einem der Förderleitung durch eine Reingasleitung zugeführten Fördergasstrom portionsweise zu einem Zielort gefördert. In der Reingasleitung ist ein Stellventil angeordnet, mittels dessen die Menge des zugeführten Fördergasstroms einstellbar ist. Die Einstellung wird von einem Regler in Abhängigkeit vom Druck in der Förderleitung im Bereich der Auslaßöffnung des Schleusorgans vorgenommen, der auf einen zuvor festgelegten Sollwert geregelt wird. Alternativ kann die Druckdifferenz zwischen der Förderleitung im Bereich der Auslaßöffnung des Schleusorgans und dessen Einlaßöffnung als Regelgröße zur Veränderung des Durchsatzes von Fördergas als Stellgröße zur Regelung herangezogen werden. In beiden Fällen kann das Verhältnis des Durchsatzes von Schüttgut und Fördergas auf einem konstanten Wert gehalten werden, so daß sich auch dann ein stabiler Förderzustand einstellt, wenn über das Schleusorgan ein Teil des zugeführten Fördergases als Leckluftströmung aus der Förderanlage entweicht.

In der US 4,059,310 A wird ein weiteres Verfahren zur Konstanthaltung des Verhältnisses von Schüttgutstrom zu Fördergasstrom beschrieben, bei dem der Druck in der Zuführleitung für das Fördergas durch Verändern der Drehzahl der Zellenradschleuse auf einen konstanten Wert geregelt wird. Die Menge des in die Förderanlage eingespeisten Schüttguts ändert sich dabei in Abhängigkeit von der Drehzahl der Zellenradschleuse.

In der EP 0 599 173 A1 wird eine lavaldüsenartige Vorrichtung mit veränderlichem Düsenquerschnitt als Regeleinrichtung zur Einstellung eines vorgegebenen Fördergasstroms offenbart. Die Veränderung des Düsenquerschnitts erfolgt dabei in Abhängigkeit vom Druck in der Reinluftleitung stromab der verstellbaren Düse, der so auf einem vorgegebenen Wert gehalten wird.

Aus der WO 97/45351 ist es bekannt, zur Verbesserung der Stabilität einer pneumatischen Langsamförderung von Schüttgut mit veränderlicher Qualität, Feuchtigkeit oder Temperatur eine unscharfe Regelung einzusetzen, bei welcher der Druck des Fördergases im Bereich des Schleusorgans gemessen und die Instabilität des gemessenen Schleusendrucks über eine bestimmte Dauer mittels eines vorher bestimmten Stabilitätskriteriums bestimmt wird.

Bei allen aufgeführten Förderverfahren werden also der Förderdruck oder die Normluftmenge auf einen vorgegebenen Wert oder Stabilitätsbereich geregelt. Die Eigenschaften des zu fördernden Schüttguts werden nicht oder nur in geringem Umfang erfaßt. Bei einer Förderung von Schüttgütern mit stark voneinander abweichenden Eigenschaften in einer Förderanlage kann der Regler den sehr unterschiedlichen Anforderungen an den notwendigen Förderdruck nicht von sich aus folgen, vielmehr muß der Betreiber der Förderanlage für jedes zu fördernde Schüttgut manuell eine spezifische Regelcharakteristik auswählen. Dieses Vorgehen ist unkomfortabel und birgt die Gefahr fehlerhafter Einstellungen, die beispielsweise ein Verstopfen der Förderleitung zur Folge haben können.

In der älteren nicht veröffentlichten WO 01/19711 werden ein Verfahren und eine Vorrichtung zur pneumatischen Förderung von Schüttgut beschrieben, welche die obengenannten Nachteile grundsätzlich vermeiden können und auf deren Inhalt im Zusammenhang mit der vorliegenden Erfindung ausdrücklich verwiesen wird. In diesen Druckschriften wird vorgeschlagen, eine Anfangsgeschwindigkeit $v_{A\ soll}$ in der Förderleitung im Bereich der Schüttgutaufgabe vorzugeben, bei der sich für alle zu fördernden Schüttgüter ein stabiler Förderzustand einstellt. Dazu wird mindestens eine Kenngröße gemessen, aus der sich die Anfangsgeschwindigkeit $v_{A\ ist}$ direkt oder indirekt bestimmen läßt, wobei der zugeführte Reingasmengenstrom $V_R$ in der Weise verändert wird, daß der Ist-Wert der Anfangsgeschwindigkeit $v_{A\ ist}$ im wesentlichen dem Soll-Wert der Anfangsgeschwindigkeit $v_{A\ soll}$ entspricht. Geeignete Kenngrößen sind beispielsweise die Strömungsgeschwindigkeit des Fördergases in der Reingasleitung, die Partikel- bzw. Pfropfengeschwindigkeit am Anfang der Förderleitung oder der Förderdruck im Bereich der Schüttgutaufgabe.

In Abkehr von der im vorveröffentlichten Stand der Technik vertretenen Lehre werden nach der WO 01/19711 also nicht der Druck des Fördergases oder der Normluftmengenstrom, sondern die Strömungsgeschwindigkeit des Fördergases im Bereich der Schüttgutaufgabe auf einen vorgegebenen Wert geregelt. Während der zur Aufrechterhaltung einer stabilen Langsamförderung vorzugebende Soll-Wert des Förderdrucks $p_{F\ soll}$ oder des Normluftmengenstroms in erheblichem Maße von den Eigenschaften des zu fördernden Schüttguts abhängig ist, wird eine für alle zu fördernden Schüttgüter einheitliche Anfangsgeschwindigkeit $v_{A\ soll}$ des Fördergases vorgegeben, die von einer Regeleinrichtung auf einen im wesentlichen konstanten Wert geregelt wird. Eine manuelle Einstellung unterschiedlicher Regelcharakteristiken ist dabei nicht erforderlich.

Die Anfangsgeschwindigkeit $v_A$ des Fördergases in der Förderleitung im Bereich der Schüttgutaufgabe ist eine theoretische Größe, die sich aus dem mittleren Mengenstrom $V_R$ des der Förderleitung zugeführten, komprimierten Fördergases und dem Querschnitt der Förderleitung bestimmen läßt. Für den Fall einer kreisrunden Förderleitung mit dem Anfangsdurchmesser $D_A$ gilt daher:

$$v_A = V_{R\ real} * 4 / (\pi * D_A^2)$$

$V_{R\ real}$ ist dabei der tatsächliche Volumenstrom des komprimierten Fördergases, also nicht der auf Standardbedingungen normierte Fördergasmengenstrom.

Die tatsächliche Geschwindigkeit des Fördergases in der Förderleitung im Bereich der Schüttgutaufgabe weicht von dieser gedanklichen Größe selbstverständlich durch die mitgeführten, den freien Querschnitt der Förderleitung verringernden Schüttgutpartikel ab und kann durch das portionsweise Fördern des Schüttguts in Form von Schüttgutpfropfen deutlichen Schwankungen unterliegen.

Umfangreiche Versuche haben jedoch ergeben, daß die in der WO 01/19711 offenbarte Fördergasmengenregelung bei Verwendung üblicher Regler unter bestimmten Bedingungen nicht ausreichend stabil arbeitet.

**Zusammenfassung der Erfindung**

Der vorliegenden Erfindung liegt die Aufgabe zugrunde, die Funktion der zuvor genannten Fördergasmengenregelung noch weiter zu verbessern.

Diese Aufgabe wird erfindungsgemäß durch folgende Verfahrensschritte gelöst:

- Messung des Förderdrucks $p_{F\ ist}$ im Bereich der Schüttgutaufgabe
- Vorgabe mindestens einer in Abhängigkeit vom gemessenen Förderdruck $p_{F\ ist}$ zu verändernden Soll-Anfangsgeschwindigkeit $v_{A\ soll} = f(p_{F\ ist})$ des Fördergases, in der Förderleitung im Bereich der Schüttgutaufgabe, bei der sich für alle zu fördernden Schüttgüter bei dem gemessenen Förderdruck $p_{F\ ist}$ ein stabiler Förderzustand einstellt
- Ermittlung der Anfangsgeschwindigkeit $v_{A\ ist}$ des Fördergases
- Verändern des zugeführten Reingasmengenstroms $V_R$ in der Weise, daß der Ist-Wert der Anfangsgeschwindigkeit $v_{A\ ist}$ im wesentlichen dem Soll-Wert der Anfangsgeschwindigkeit $v_{A\ soll}$ entspricht.

Der wesentliche Unterschied zu der zuvor beschriebenen nicht zum Stand der Technik gehörenden Luftmengenregelung besteht also darin, daß nicht eine einzige, für alle Förderdrücke geltende Anfangsgeschwindigkeit $v_{A\ soll}$ vorgegeben wird, sondern eine vom Förderdruck $p_{F\ ist}$ beziehungsweise seiner Veränderungstendenz abhängige Funktion $v_{A\ soll} = f(p_{F\ ist})$.

Dabei wird die Anfangsgeschwindigkeit $v_{A\,soll}$ mit steigendem Förderdruck $p_{F\,ist}$ verringert und mit sinkendem Förderdruck $p_{F\,ist}$ vergrößert. Dies erfolgt in Form einer Hysteresefunktion, wobei die Anfangsgeschwindigkeiten $v_{A\,soll}$ für steigenden Förderdruck $p_{F\,ist}$ im wesentlichen niedrigere Werte annimmt als für sinkenden Förderdruck. Zu Vereinfachung der Regelung kann die Veränderung der Anfangsgeschwindigkeit $v_{A\,soll}$ in Abhängigkeit vom Förderdruck $p_{F\,ist}$ mit vorteilhafter Wirkung auf die Regelstabilität in Form einer Treppenfunktion erfolgen.

Die übrigen Unteransprüche betreffen weitere bevorzugte Ausführungsformen des erfindungsgemäßen Verfahrens.

Weitere Merkmale, Vorteile und Einzelheiten der Erfindung ergeben sich aus der nachfolgenden Beschreibung eines Ausführungsbeispiels der Erfindung anhand der Zeichnung.

**Kurze Beschreibung der Zeichnung**

Fig. 1    zeigt eine zur Durchführung des erfindungsgemäßen Verfahrens geeignete Förderanlage,

Fig. 2    zeigt eine Abbildung einer geeigneten Funktion $v_{A\,soll} = f(p_F)$ und

Fig. 3    zeigt ein Diagramm für verschiedene Schüttgüter.

**Beschreibung der bevorzugten Ausführungsform**

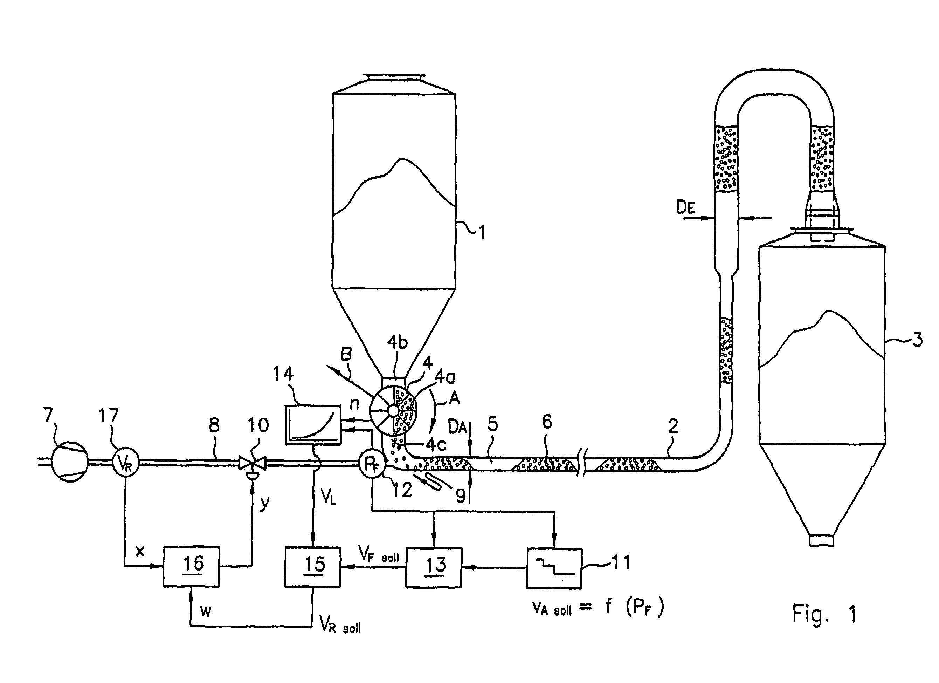

Die in Fig. 1 dargestellte Förderanlage umfaßt einen Aufgabebehälter 1, der über eine Förderleitung 2 mit einem als Zielort dienenden Empfangsbehälter 3 verbunden ist. Das Schüttgut wird mittels eines Schleusorgans in Form einer Zellenradschleuse 4 mit einem Zellenrad 40, einem Zulaufschacht 4b und einem Auslaufschacht 4c aus dem Aufgabebehälter 1 in die Förderleitung 2 eingespeist und mit Hilfe komprimierten, sich im Verlaufe der Förderung entspannenden Fördergases in Form diskreter, zueinander durch Gaspolster 5 beabstandeter Schüttgutpfropfen 6 zum Zielort transportiert. Das komprimierte Fördergas wird von einem Verdichter 7 bereitgestellt und der Förderleitung 2 über eine Reingasleitung 8 im Bereich der Schüttgutaufgabe 9 zugeführt.

Die Förderleitung 2 ist abgestuft ausgeführt und weist anfänglich einen Durchmesser $D_A$ auf, der sich gegen Ende der Förderleitung 2 in Form einer Stufe auf einen Durchmesser $D_E$ erweitert. Durch die Querschnittserweiterung kann die Fördergeschwindigkeit im Endbereich der Förderleitung 2 herabgesetzt werden.

Der Mengenstrom des über die Reingasleitung 8 zugeführten Fördergases ist mittels eines Ventils 10 einstellbar und kann an die Förderbedingungen angepaßt werden. Ein Verstellen des Ventils 10 wird insbesondere bei einer Änderung des zu fördernden Schüttgutmengenstroms, einer Umstellung auf ein Schüttgut mit anderen Fördereigenschaften oder einer Änderung der Länge der Förderleitung 2 erforderlich, die durch Schalten von in der Förderleitung angeordneten, nicht dargestellten Weichen auftreten kann.

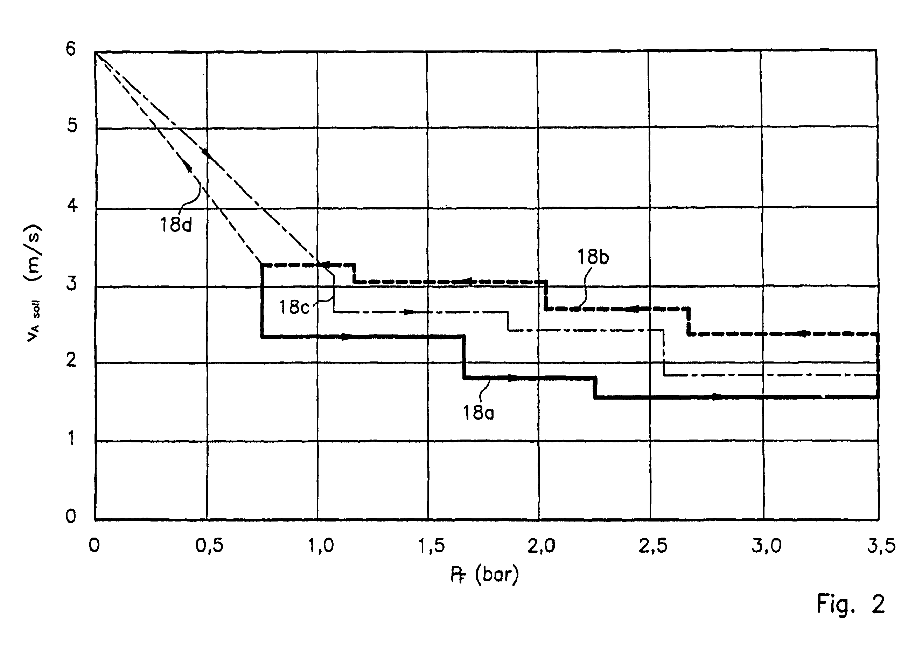

Der Fördergasmengenstrom wird so eingestellt, daß im Bereich der Schüttgutaufgabe 9 die Anfangs-Soll-Geschwindigkeit $v_{A\,soll}$ des Fördergases in der Förderleitung 2 einer vom Förderdruck $p_F$ abhängigen Funktion $v_{A\,soll} = f(p_F)$ folgt, die im Ausführungsbeispiel als Treppenfunktion (s. Fig. 2) ausgebildet und in einer ersten Rechnereinheit 11 hinterlegt ist. Der Förderdruck $p_F$ wird mittels eines im Bereich der Schüttgutaufgabe 9 in der Reingasleitung 8 angeordneten Drucksensors 12 gemessen. Parallel dazu errechnet eine zweite Rechnereinheit 13 unter Berücksichtigung des mittels Drucksensor 12 bestimmten Förderdrucks $p_F$ den zur Aufrechterhaltung der vorgegebenen Anfangsgeschwindigkeit $v_{A\,soll}$ erforderlichen Fördergasmengenstrom $V_{F\,soll}$. Die Grundlage für die Berechnung bildet die bekannte, auf normierte Gas-Volumenströme (Normdruck 1 bar 20°C) abgestellte Beziehung:

$$V_{F\,soll} = v_{A\,soll} * (p_F + p_{atm})/p_{atm} * \pi/4 * D_A^2$$

Zur Herleitung der Beziehung wird auf die einschlägige Fachliteratur verwiesen, beispielsweise auf das Lehrbuch von Klinzing, Marcus, Rizk und Leung, "Pneumatic Conveying of Solids, A Theoretical and Practical Approach", 2. Edition 1997, Kapitel 6.4 ff., Verlag Chapman & Hall.

Der Drucksensor 12 ist im Ausführungsbeispiel in der Reingasleitung 8 angeordnet, damit ein Kontakt mit Schüttgutpartikeln vermieden wird. Grundsätzlich ist es jedoch möglich, den Drucksensor 12 auch unterhalb der Zellenradschleuse 4 oder am Anfang der Förderleitung 2 einzubauen.

Über die zur Schüttguteinspeisung eingesetzte Zellenradschleuse 4 geht ein Teil des über die Reingasleitung 8 zugeführten Fördergasmengenstroms durch Schöpfverluste und Spaltströmung entlang des Umfangs des Zellenrads 4a als Leckgasmengenstrom $V_L$ verloren. Der Betrag dieses Leckgasmengenstroms $V_L$ ist von der Bauart der Zellenradschleuse 4, dem Differenzdruck zwischen Zulaufschacht 4b und Auslaufschacht 4c und der Drehzahl n der Schleuse 4 abhängig und wird für jeden Schleusentyp üblicherweise durch Messung ermittelt. Die Meßergebnisse können als Funktion $V_L = f(p_F, n)$ in einer dritten Rechnereinheit 14 hinterlegt werden. Eine Leckgaskompensation kann aber grundsätzlich auch durch on-line-Messung des aus der Zellenradschleuse 4 abgeführten Leckgasmengenstroms $V_L$ (angedeutet durch gestrichelten Pfeil B) erfolgen.

Der Rechenwert für $V_L$ und der Sollwert für den Fördergasmengenstrom $V_{F\,soll}$ werden nachfolgend an eine weitere vierte Rechnereinheit 15 übergeben, die den erforderlichen Reingasmengenstrom $V_{R\,soll}$ nach der Beziehung

$$V_{R\,soll} = V_{F\,soll} + V_L$$

errechnet.

Der Rechenwert $V_{R\,soll}$ wird als Sollwert w einem Regler 16 mitgeteilt, der durch Verändern einer Stellgröße y das Ventil 10 in der Weise verstellt, daß der durch einen Sensor 17 gemessene Ist-Fördergasmengenstrom in der Reingasleitung 8 der berechneten Sollwertvorgabe $V_{R\,soll}$ entspricht.

Über den Umweg einer Druck- und Volumenstrommessung wird also die Anfangsgeschwindigkeit $v_A$ als Regelgröße durch Verändern des Fördergasmengenstroms als Stellgröße auf einen druckabhängigen Sollwert geregelt, wobei die Leckgasverluste am Schleusorgan 4 kompensiert werden.

Um das Regelverhalten zu stabilisieren und ein Übersteuern des Reglers 16 sicher zu vermeiden, werden Änderungen des gemessenen Förderdrucks $p_F$ bei der Bestimmung des Leckgasmengenstroms $V_L$ unverzüglich berücksichtigt, gehen in die Berechnung des erforderlichen Fördergasmengenstroms $V_F$ aber zeitlich gemittelt ein.

Die zur Aufrechterhaltung einer stabilen Förderung zu hinterlegende Funktion

$$v_{A\,soll} = f\,(p_F) \text{ wird nachfolgend erläutert.}$$

Der beim Betreiben der Förderanlage auftretende Förderdruck $p_F$ kann im Ausführungsbeispiel einen Wertebereich von 0,75 bar bis 3,5 bar über Umgebungsdruck (Atmosphärendruck) annehmen. Beim An- und Abfahren der Anlage kann er sich naturgemäß auch auf Umgebungsdruck absinken. In der in Fig. 2 dargestellten Funktion sind die Abhängigkeiten der Anfangsgeschwindigkeit $v_{A\,soll}$ vom gemessenen Förderdruck $p_{F\,ist}$ daher für einen Bereich von 0 bis 3,5 bar abgebildet.
Beim Betreiben der Förderanlage folgt die Anfangsgeschwindigkeit $v_{A\,soll}$ einer ersten, treppenförmigen Funktion 18a, wobei sich die Anfangsgeschwindigkeit $v_{A\,soll}$ mit steigendem Förderdruck $p_{F\,ist}$ tendenziell verringert. Diese Kurve wird jedoch nur dann verwendet, wenn der gemessene, über einen gewissen Zeitraum gemittelte Förderdruck $p_{F\,ist}$ gleich bleibt (stationärer Betriebspunkt) oder sich tatsächlich im Laufe der Förderung erhöht. Sinkt der Förderdruck $p_{F\,ist}$ hingegen, wird eine zweite, ebenfalls treppenförmige Funktion 18 b ausgewählt, die gegenüber der ersten Funktion 18a zu einer höheren Soll-Anfangsgeschwindigkeit $v_{A\,soll}$ hin versetzt ist. Die Funktionen 18 a und 18b bilden also eine Hysterese, welche die Stabilität der Luftmengenregelung deutlich verbessert.

Die Funktionen 18a und 18b werden empirisch festgelegt und können bei Bedarf während der Inbetriebnahme der Förderanlage angepaßt werden. Die Treppenfunktionen sind im Ausführungsbeispiel so ausgebildet, daß die Anfangsgeschwindigkeit $v_{A\,soll}$ jeweils über Druckintervalle $\Delta p_{F\,ist}$ von 0,6 bis 1,2 bar konstant gehalten wird. Die zuvorgenannte Anpassung kann daher auf einfache Weise durch Änderung von Tabellenwerten erfolgen.

Beim Anfahren der Förderanlage wird bereichsweise eine dritte Funktion 18c ausgewählt, die gegenüber der Funktion 18a für den stationären Förderzustand zu höheren Anfangsgeschwindigkeiten $v_{A\,soll}$ hin versetzt ist, im Ausführungsbeispiel gemäß Fig. 2 jedoch unterhalb der Kurve 18b für sinkenden Förderdruck $p_{F\,ist}$ verläuft. Durch die Erhöhung der Anfangsgeschwindigkeiten $v_{A\,soll}$ bis höchstens an die Grenze der Instabilität wird ein Verstopfen der Förderleitung 2 beim Anfahren vermieden. Der treppenförmig verlaufende Bereich der Funktion 18c beginnt rechts der Funktion 18a und wird linear vom Startwert (Förderdruck $p_{F\,ist} = 0$ bar) her angefahren.

Zum Beenden des Fördervorgangs in Fig. 2 wird der linksseitige Endpunkt der Funktion 18b mittels einer linearen Funktion 18d mit dem Startwert verbunden.

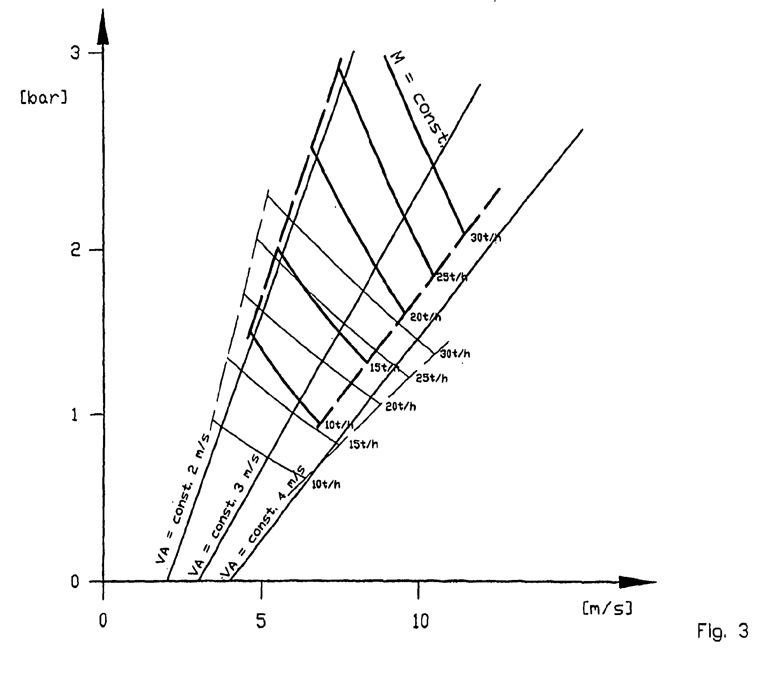

Erläuternd sei auch noch auf Fig. 3 verwiesen, die zwei unterschiedliche Schüttgüter und die Bereiche zeigt, innerhalb derer eine stabile Langsamförderung möglich ist. Aufgetragen ist der Förderdruck $p_F$ über der Fördergas-Geschwindigkeit $v_E$ am Ende einer Förderleitung. Der Förderdruck $p_F$ über der Fördergas-Geschwindigkeit $v_E$ ist jeweils für unterschiedliche Anfangsgeschwindigkeiten $v_A$ = const., und zwar in einem praxisgerechten Bereich von 2 m/s, 3 m/s und 4 m/s aufgetragen. Weiterhin sind in dieser Kurvenschar jeweils konstante Schüttgutmengenströme M = const. für 10 t/h bis 30 t/h dargestellt. Die entsprechenden Verläufe sind für ein schwierig zu förderndes Schüttgut, nämlich ein relativ weiches Schüttgut, in stark ausgezogenen Linien dargestellt, während die entsprechenden Kurven für ein gut zu förderndes Schüttgut, nämlich ein hartes Schüttgut, dünn ausgezogen dargestellt sind. Gestrichelt sind die entsprechenden Grenzbereiche dargestellt, wobei auf der in Fig. 3 linken Seite im Bereich niedriger Luftgeschwindigkeit Verstopfungen in den Förderleitungen auftreten, während bei höheren Geschwindigkeiten, in dem in Fig. 3 rechten Bereich eine instabile Förderung auftritt. Das Diagramm gemäß Fig. 3 zeigt also den Bereich, innerhalb dessen das beschriebene Verfahren für jedes Schüttgut anwendbar ist, das mit seinen Fördereigenschaften in diesen Bereich fällt.

**Parameter**

n    Drehzahl (l/min)
v    Geschwindigkeit (m/s)
p    Druck (bar)
V    Mengenstrom (m³/s)

**Indizes**

A       Anfang
ist     Ist-Wert
atm     atmosphärisch
R       Reinluftleitung
E       Ende
real    nicht normierter Volumenstrom (m³/s)
F       Fördersoll    Soll-Wert
L       Leck

**Patentansprüche**

**1.** Verfahren zur pneumatischen Förderung von Schüttgut, insbesondere von Kunststoffgranulaten, durch eine Förderleitung (2), bei dem das Schüttgut an mindestens einer Schüttgutaufgabe (9) mittels eines Schleusorgans (4) in einen einstellbaren Fördergasmengenstrom eingespeist und in Form diskreter, durch Fördergas (5) zueinander beabstandeter Schüttgutpfropfen (6) von der Schüttgutaufgabe (9) zu mindestens einem Zielort (3) transportiert wird und der Förderdruck $p_{F\,ist}$ im Bereich der Schüttgutaufgabe (9) gemessen wird, **gekennzeichnet durch** folgende Verfahrensschritte:

- Vorgabe mindestens einer in Abhängigkeit vom gemessenen Förderdruck $p_{F\,ist}$ zu verändernden Soll-Anfangsgeschwindigkeit $v_{A\,soll} = f(p_{F\,ist})$ des Fördergases, in der Förderleitung im Bereich der Schüttgutaufgabe (9), bei der sich für alle zu fördernden Schüttgüter bei dem gemessenen Förderdruck $p_{F\,ist}$ ein stabiler Förderzustand einstellt
- Ermittlung der Anfangsgeschwindigkeit $v_{A\,ist}$ des Fördergases
- Verändern des zugeführten Reingasmengenstroms $V_R$ in der Weise, daß der Ist-Wert der Anfangsgeschwindigkeit $v_{A\,ist}$ im wesentlichen dem Soll-Wert der Anfangsgeschwindigkeit $v_{A\,soll}$ entspricht,

wobei

- die Anfangsgeschwindigkeit $v_{A\,soll}$ im wesentlichen mit steigendem Förderdruck $p_{F\,ist}$ verringert und mit sinkendem Förderdruck $p_{F\,ist}$ vergrößert wird;
- die Veränderung der Anfangsgeschwindigkeit

$v_{A\,soll}$ in Abhängigkeit vom Förderdruck $p_{F\,ist}$ in Form einer Hysteresefunktion erfolgt, wobei die Anfangsgeschwindigkeiten $v_{A\,soll}$ für steigenden Förderdruck $p_{F\,ist}$ im wesentlichen niedrigere Werte annimmt als für sinkenden Förderdruck.

**2.** Verfahren nach Anspruch 1, **dadurch gekennzeichnet,**
**daß** die Veränderung der Anfangsgeschwindigkeit $v_{A\,soll}$ in Abhängigkeit vom Förderdruck $p_{F\,ist}$ im wesentlichen in Form einer Treppenfunktion erfolgt.

**3.** Verfahren nach Anspruch 2, **dadurch gekennzeichnet,**
**daß** $v_{A\,soll}$ über Druckintervalle $\Delta p_{F\,ist}$ von 0,4 bis 1,5 bar, insbesondere 0,6 bis 1,2 bar konstant gehalten wird.

**4.** Verfahren nach einem der Ansprüche 1 bis 3, **dadurch gekennzeichnet,**
**daß** zum Anfahren der pneumatischen Förderung die in Abhängigkeit vom gemessenen Förderdruck $p_{F\,ist}$ zu verändernde Anfangsgeschwindigkeit $v_{A\,soll}$ höher gewählt wird als beim Betreiben im stationären Betrieb.

**5.** Verfahren nach einem der Ansprüche 1 bis 4, **gekennzeichnet durch**

- Messung der Geschwindigkeit $v_R$ des Fördergases in einer Reingasleitung (8)
- Bestimmung eines aus dem Schleusorgan (4) austretenden Leckgasmengenstroms $V_L$
- Berechnung der Anfangsgeschwindigkeit $v_{A\,ist}$ aus der gemessenen Geschwindigkeit $v_R$ und des Leckgasmengenstroms $V_L$

**6.** Verfahren nach einem der Ansprüche 1 bis 4, **gekennzeichnet durch**

- Messung des Reingasmengenstroms $V_{R\,ist}$
- Bestimmung eines aus dem Schleusorgan (4) austretenden Leckgasmengenstroms $V_L$
- Berechnung des Sollwerts $V_{R\,soll}$ des Reingasmengenstroms als Summe des Leckgasmengenstroms $V_L$ und des Fördergasmengenstroms $V_F$, der aus dem Förderdruck $p_F$ und $v_{A\,soll}$ errechnet wird.
- Verändern des Reingasmengenstroms $V_R$ in der Weise, daß der Ist-Wert des Reingasmengenstroms $V_{R\,ist}$ im wesentlichen dem Soll-Wert des Reingasmengenstroms $V_{R\,soll}$ entspricht, wodurch sich die vorgegebene Anfangsgeschwindigkeit $v_{A\,soll}$ einstellt.

**7.** Verfahren nach Anspruch 6, **dadurch gekennzeichnet,**

**daß** Veränderungen des Förderdrucks $p_F$ bei der Berechnung des Fördergasmengenstroms $V_F$ gegenüber der Bestimmung des Leckgasmengenstroms $V_L$ zeitlich gemittelt berücksichtigt werden.

8.  Verfahren nach einem der Ansprüche 1 bis 4, **gekennzeichnet durch**

    - Messung des Reingasmengenstroms $V_{R\ ist}$
    - Bestimmung eines aus dem Schleusorgan (4) austretenden Leckgasmengenstroms $V_L$
    - Berechnung des Ist-Werts $v_{A\ ist}$ aus dem Förderdruck $p_{F\ ist}$, dem Reingasmengenstrom $V_{R\ ist}$ und dem Leckgasmengenstrom $V_L$.

**Claims**

1.  A method of pneumatic bulk material conveyance, in particular of plastic pellets, through a conveying duct (2), in which, at at least one bulk material inlet (9), the bulk material is fed by a sluice member (4) into an adjustable carrier gas flow and conveyed, in the form of discrete bulk material slugs (6) spaced apart by carrier gas (6), from the bulk material inlet (9) to at least one destination (3), **characterized by** the following steps:

    - measuring the conveying pressure $p_{Fist}$ in the vicinity of the bulk material inlet (9)
    - presetting, in the conveying duct in the vicinity of the bulk material inlet (9), at least one desired carrier gas initial velocity $v_{Asoll} = f\ (p_{Fist})$ which is to be modified in dependence on the measured conveying pressure $p_{Fist}$ and at which stable conveying conditions result at the measured conveying pressure $p_{Fist}$ for all types of bulk material to be conveyed
    - determining the carrier gas initial velocity $v_{Aist}$
    - modifying the supplied clean gas flow rate $V_R$ such that the initial velocity actual value $v_{Aist}$ substantially corresponds to the initial velocity set value $v_{Asoll}$,

    wherein

    - the initial velocity $v_{Asoll}$ is reduced substantially as the conveying pressure $p_{Fist}$ increases and is increased as the conveying pressure $p_{Fist}$ decreases;
    - modification of the initial velocity $v_{Asoll}$ takes place in dependence on the conveying pressure $p_{Fist}$ in the form of a hysteresis function, with the initial velocities $V_{Asoll}$ for increasing conveying pressure $p_{Fist}$ assuming substantially lower values than for decreasing conveying pressure.

2.  A method according to claim 1, **characterized in that** modification of the initial velocity $v_{Asoll}$ takes place in dependence on the conveying pressure $p_{Fist}$ substantially in the form of a step function.

3.  A method according to claim 2, **characterized in that** $v_{Asoll}$ is kept constant via pressure intervals $\Delta p_{Fist}$ of 0.4 to 1.5 bar, in particular 0.6 to 1.2 bar.

4.  A method according to one of claims 1 to 3, **characterized in that** for pneumatic conveyance start-up, the initial velocity $v_{Asoll}$, which is to be modified in dependence on the measured conveying pressure $p_{Fist}$, is selected higher than during stationary operation.

5.  A method according to one of claims 1 to 4, **characterized by**

    - measurement of the carrier gas velocity $v_R$ inside a clean gas conduit (8)
    - determination of a leakage gas flow rate $V_L$ that escapes from the sluice (4)
    - computation of the initial velocity $v_{Aist}$ from the measured velocity $V_R$ and the leakage gas flow rate $V_L$.

6.  A method according to one of claims 1 to 4, **characterized by**

    - measurement of the conveying pressure $p_{Fist}$ and of a clean gas flow rate $V_{Rist}$
    - determination of a leakage gas flow rate $V_L$ that escapes from the sluice (4)
    - computation of the set value $V_{Rsoll}$ of the clean gas flow rate as a sum of the leakage gas flow rate $V_L$, and of the carrier gas flow rate $V_F$ which is computed from the conveying pressure $p_F$ and $v_{Asoll}$
    - modification of the clean gas flow rate $V_R$ such that the clean gas flow rate actual value $V_{Rist}$ substantially corresponds to the clean gas flow rate set value $V_{Rsoll}$, as a result of which the given initial velocity $v_{Asoll}$ establishes.

7.  A method according to claim 6, **characterized in that** modifications of the conveying pressure $p_F$ are averaged in time upon computation of the carrier gas flow rate $V_F$ as opposed to determination of the leakage gas flow rate $V_L$.

8.  A method according to one of claims 1 to 4, **characterized by**

    - measurement of the conveying pressure $p_{Fist}$ and of the clean gas flow rate $V_{Rist}$
    - determination of a leakage gas flow rate $V_L$ that escapes from the sluice (4)
    - computation of the actual value $v_{Aist}$ from the conveying pressure $p_{Fist}$, the clean gas flow rate $V_{Rist}$ and the leakage gas flow rate $V_L$
- modification of the clean gas flow rate $V_R$ such that the initial velocity actual value $v_{Aist}$ substantially corresponds to the initial velocity set value $v_{Asoll}$.

## Revendications

**1.** Procédé pour le transport pneumatique d'une matière en vrac, en particulier des granulés de matière plastique, à travers une conduite de transport (2), dans lequel la matière en vrac est introduite au niveau d'au moins une zone d'introduction (9) de la matière en vrac au moyen d'un organe à fonction d'écluse (4) dans un flux de gaz de transport à débit réglable et est véhiculée sous la forme de bouchons de matière (6) discrets, séparés les uns des autres par le gaz de transport (5), à partir de la zone d'introduction (9) de la matière en vrac jusque vers au moins un lieu cible (3) et la pression de transport $p_{Fist}$ est mesurée dans la zone d'introduction (9) de la matière en vrac, **caractérisé par** les étapes suivantes :

- définition d'au moins une vitesse initiale de consigne $v_{Asoll} = f(p_{Fist})$ pour le gaz de transport, à faire varier en fonction de la pression de transport $p_{Fist}$ mesurée, dans la conduite de transport dans la zone d'introduction (9) de la matière en vrac, avec laquelle s'établit un transport stable pour toutes les matières en vrac à véhiculer avec la pression de transport $p_{Fist}$ mesurée,
- calcul de la vitesse initiale $v_{Aist}$ du gaz de transport,
- variation du débit $V_R$ du gaz acheminé de telle sorte que la valeur réelle de la vitesse initiale $v_{Aist}$ est sensiblement égale à la valeur de consigne de la vitesse initiale $v_{Asoll}$,
- la vitesse initiale $v_{Asoll}$ diminuant sensiblement si la pression de transport $p_{Fist}$ augmente et augmentant si la pression de transport $p_{Fist}$ diminue,
- la variation de la vitesse initiale $V_{Asoll}$ en fonction de la pression de transport $p_{Fist}$ étant effectuée sous la forme d'une fonction d'hystérésis, la vitesse initiale $V_{Asoll}$ pour une pression de transport $p_{Fist}$ croissante acceptant sensiblement des valeurs plus faibles que dans le cas d'une pression de transport décroissante.

**2.** Procédé selon la revendication 1, **caractérisé en ce que** la variation de la vitesse initiale $v_{Asoll}$ en fonction de la pression de transport $p_{Fist}$ est effectuée sensiblement sous la forme d'une fonction échelonnée.

**3.** Procédé selon la revendication 2, **caractérisé en ce que** $v_{Asoll}$ est maintenue constante sur des intervalles de pression $\Delta p_{Fist}$ de 0,4 à 1,5 bar, en particulier de 0,6 à 1,2 bar.

**4.** Procédé selon l'une quelconque des revendications 1 à 3, **caractérisé en ce que**, pour la mise en marche du transport pneumatique, la vitesse initiale $v_{Asoll}$ à varier en fonction de la pression de transport $p_{Fist}$ mesurée est choisie à une valeur plus élevée que pour le fonctionnement en mode stationnaire.

**5.** Procédé selon l'une quelconque des revendications 1 à 4, **caractérisé par**

- la mesure de la vitesse $V_R$ du gaz de transport dans une conduite de gaz (8),
- la détection de fuites de gaz $V_L$ sortant de l'organe à fonction d'écluse (4),
- le calcul de la vitesse initiale $v_{Aist}$ à partir de la vitesse $V_R$ mesurée et des fuites de gaz $V_L$.

**6.** Procédé selon l'une quelconque des revendications 1 à 4, **caractérisé par**

- la mesure du débit du gaz $V_{Rist}$,
- la détection de fuites de gaz $V_L$ sortant de l'organe à fonction d'écluse (4),
- le calcul de la valeur de consigne $V_{Rsoll}$ du débit du gaz en tant que somme des fuites de gaz $V_L$ et du débit du gaz de transport $V_F$, qui est calculé à partir de la pression de transport $p_F$ et de $v_{Asoll}$,
- la variation du débit de gaz $V_R$ de telle sorte que la valeur réelle du débit de gaz $V_{Rist}$ est sensiblement égale à la valeur de consigne du débit de gaz $V_{Rsoll}$, moyennant quoi la vitesse initiale $v_{Asoll}$ prédéfinie se régule.

**7.** Procédé selon la revendication 6, **caractérisé en ce que** les variations de la pression de transport $p_F$ dans le calcul du débit du gaz de transport $V_F$ par rapport à la détection des fuites de gaz $V_L$ sont prises en compte en tant que valeurs moyennes en fonction du temps.

**8.** Procédé selon l'une quelconque des revendications 1 à 4, **caractérisé par**

- la mesure du débit du gaz $V_{Rist}$,
- la détection des fuites de gaz $V_L$ sortant de l'organe à fonction d'écluse (4),
- le calcul de la valeur réelle $v_{Aist}$ à partir de la pression de transport $p_F$ et de $v_{Asoll}$, du débit de gaz $V_{Rist}$ et des fuites de gaz $V_L$.

Fig. 1

$v_{A\,soll} = f\,(P_F)$

Fig. 2

EP 1 337 451 B2

Fig. 3